Europäisches Patentamt

European Patent Office (11) Publication number: **0 077 137**

Office européen des brevets **B1**

(12) **EUROPEAN PATENT SPECIFICATION**

(45) Date of publication of patent specification: **22.04.87** (51) Int. Cl.⁴: **F 16 D 65/12**

(21) Application number: **82305008.3**

(22) Date of filing: **23.09.82**

(54) Method of manufacture of a brake disc.

(30) Priority: **01.10.81 GB 8129650**

(43) Date of publication of application:
**20.04.83 Bulletin 83/16**

(45) Publication of the grant of the patent:
**22.04.87 Bulletin 87/17**

(84) Designated Contracting States:
**DE FR**

(56) References cited:
**CH-A- 407 673**
**DE-A-1 575 748**
**DE-A-1 600 149**
**DE-A-1 775 685**
**DE-A-2 110 482**
**DE-B-1 247 767**
**FR-A-2 325 851**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Joynes, Brian**
**14 Crossfields Road**
**Warwick Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

This invention relates to a method of manufacture of a brake disc for use on motor vehicle disc brakes.

A problem associated with vehicle disc brakes is that the friction between brake pads and the disc during application of the brakes generates heat in that part of the disc on which its friction surfaces are located and can cause this part of the disc to reach a temperature of about 500—600°C. The heat is then conducted away from the friction surfaces of the disc and may be transferred to the rotary member e.g. a wheel hub, on which the disc is secured. In such circumstances the grease in the wheel hub bearing melts and this could cause subsequent failure of the bearing.

One solution to this problem is to provide a ventilated disc having slots therein through which air will circulate to dissipate the heat generated on braking. A brake disc of this type is disclosed in DE—A—2110482 in which a pair of iron friction discs are bonded onto a ventilated aluminium hub, the discs being bonded to the hub by casting the hub in contact with the discs in order to provide good heat conduction therebetween. An alternative approach is to provide a disc of two part construction in which thermal conduction between a friction disc and a hub formation is reduced. One such construction is disclosed in DE—B—1247767, in which a friction disc is mounted by casting upon a support ring by means of radially extending spokes so that a gap is provided between the inner periphery of the disc and outer periphery of the support ring.

The present invention provides a simpler method of producing a brake disc of the latter type.

Accordingly there is provided a method of manufacture of a brake disc having a radially outer annular part presenting radial friction surfaces in opposite directions and secured by casting at its inner periphery to a coaxial radially inner part for securing the disc to a rotary member and having a substantially continuous annular air gap between the inner periphery of the radially outer part and the outer periphery of the radially inner part (known from DE—B—1247767), characterised in that the radially inner part which is formed of an aluminium alloy is cast in situ onto the radially outer annular part which is formed of a ferrous metal, the radially outer annular part being cold or tepid when the radially inner part is cast thereon, so that when the radially inner part subsequently cools the substantially continuous annular air gap is formed by shrinkage of the radially inner part away from the radially outer part, after casting.

The invention will be described by way of example and with reference to the accompanying drawings in which:—

Figure 1 is an elevation of a brake disc formed in accordance with this invention, showing in one quadrant a section of the line I—I of Figure 2; and

Figure 2 is a section on the line II—II of Figure 1.

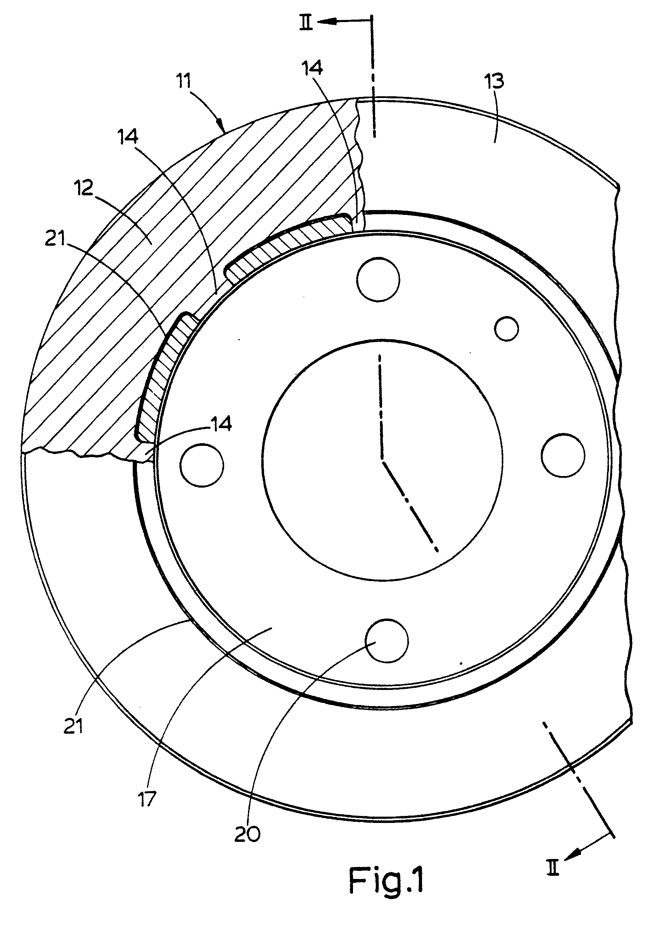

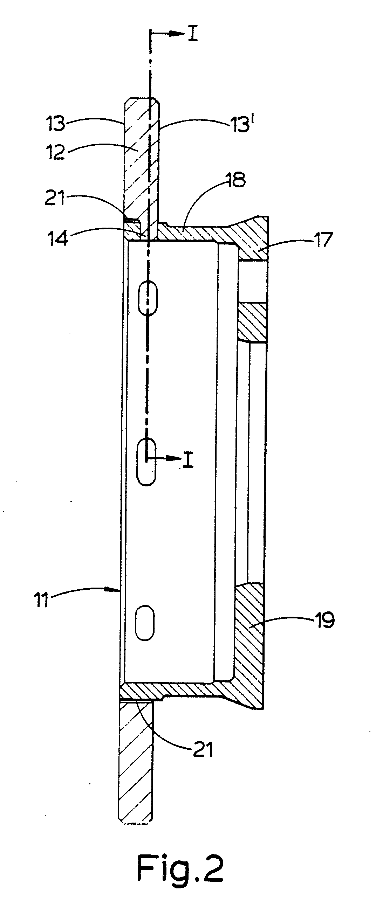

With reference to Figure 1 and Figure 2 a 220 mm diameter brake disc 11 comprises an outer annular part 12 having a pair of friction surfaces 13, 13' thereon which face in opposite directions. The outer annular part 12 is formed from cast iron and has eight radially inwardly projecting lugs 14 integral therewith.

The lugs 14 are axially offset towards one friction surface 13' and are utilised for securing an inner part 17 of the disc to the outer part 12.

The inner part 17 of the disc is an aluminium alloy casting having an axially extending portion 18 projecting away from the inner periphery of the outer part and a radially extending center portion 19 at the centre so that the disc resembles a "top-hat" in cross-section. The centre portion 19 has holes 20 therein for securing the disc to a rotary member, e.g., the wheel hub of a motor car.

Between the inner and outer portions 17 and 12 is a continual annular gap 21 which is bridged only by the lugs 14. The gap 21 is produced by casting the inner part 17 in situ onto the outer part 12 and having the outer part cold or tepid when the aluminium is cast thereon. When the casting subsequently cools the different co-efficients of thermal expansion of the iron and aluminium cause the aluminium to shrink away from the outer cast iron part 12 to form the gap 21 of about 0.015"—0.020" (0.35—0.50 mm). The size of the gap can be varied by altering the temperature of the outer iron part 12 when the aluminium is cast, i.e. the cooler the outer part, the larger the gap 21. The aluminium also contracts axially to grip the lugs 14 and firmly secure the inner and outer parts, 17 and 12 respectively, together.

The described brake discs of the herein disclosed invention have been tested under the conditions of E.E.C. Directive 71/320/EEC Annex to paragraph 1: 3 Type 1 test for brake fade and have been found to run cooler than for conventional one piece cast iron type brake discs. Also, because the friction surfaces are on a separate outer part 12 to the inner part 17 the tendency of the disc to distort during braking is lower than for a one-piece "top-hat" shaped disc. Further, the presence of the air gap in the preferred embodiment helps reduce brake squeal.

## Claims

1. A method of manufacture of a brake disc (11) having a radially outer annular part (12) presenting radial friction surfaces (13, 13') in opposite directions and secured by casting at its inner periphery to a coaxial radially inner part (17) for securing the disc (11) to a rotary member and having a substantially continuous annular air gap (21) between the inner periphery of the radially outer part (12) and the outer periphery of the radially inner part (17), the method being characterised in that the radially inner part (17) which is formed of an aluminium alloy is cast in situ onto the radially outer annular part (12) which is formed of a ferrous metal, the radially outer annular part (12) being cold or tepid when the radially inner part (17) is cast thereon, so that when the radially inner part (17) subsequently cools the substantially continuous annular air gap (21) is formed by shrinkage of the radially inner part (17) away from the radially outer part (12) after casting.

2. A method as claimed in Claim 1, characterised by the radially outer annular part (12) having integral radially inwardly projecting lugs (14) around its inner periphery whereby the radially inner part (17) is cast onto the lugs (14) to secure the radially outer and radially inner parts (12 and 17) together such that the air gap (21) is bridged only by the lugs (14).

3. A method as claimed in Claim 2 characterised in that the lugs (14) are formed axially off set towards one friction surface (13').

4. A method as claimed in any one of the preceding claims characterised in that the size of the air gap (21) is varied by altering the temperature of the radially outer annular part (12) when the radially inner part (17) is cast thereon.

5. A method as claimed in any one of the preceding claims characterised in that the air gap (21) is not greater than 0.5 mm.

6. A method as claimed in any one of the preceding claims characterised in that the radially inner part (17) is formed with an axially extending portion (18) projecting away from the inner periphery of the radially outer annular part (12) and a radially extending centre portion (19).

## Patentansprüche

1. Verfahren zur Herstellung einer Bremsscheibe (11) mit einem radial äußeren ringförmigen Teil (12), der in entgegengesetzte Richtungen weisende radiale Reibungsflächen (13, 13') aufweist und an seinem inneren Rand an einem koaxialen radial inneren Teil (17) zum Befestigen der Scheibe (11) an einem Drehteil durch Gießen befestigt ist, und einem im wesentlichen ununterbrochenen ringförmigen Luftspalt (21) zwischen dem inneren Rand des radial äußeren Teiles (12) und dem äußeren Rand des radial inneren Teiles (17), dadurch gekennzeichnet, daß der radial innere Teil (17), der aus einer Aluminiumlegierung gebildet ist, an den radial äußeren ringförmigen Teil (12) angegossen wird, der aus einem Eisenmetall gebildet ist, wobei der radial äußere ringförmige Teil (12) kalt oder lauwarm ist, wenn der radial innere Teil (17) an ihn angegossen wird, so daß, wenn der radial innere Teil (17) sich anschließend abkühlt, der im wesentlichen ununterbrochene ringförmige Luftspalt (21) dadurch gebildet wird, daß der radial innere Teil (17) von dem radial äußeren Teil (12) nach dem Gießen wegschrumpft.

2. Verfahren nach Anspruch 1, dadurch gekennzeichnet, daß der radial äußere ringförmige Teil (12) einstückig mit ihm ausgebildete radial einwärts ragende Nasen (14) um seinen inneren Rand herum hat, wobei der radial innere Teil (17) an die Nasen (14) angegossen wird, um den radial äußeren und den radial inneren Teil (12 und 17) aneinander zu befestigen aneinander zu befestigen, derart, daß der Luftspalt (21) nur von den Nasen (14) überbrückt wird.

3. Verfahren nach Anspruch 2, dadurch gekennzeichnet, daß die Nasen (14) auf eine Reibungsfläche (13') zu axial versetzt gebildet werden.

4. Verfahren nach irgendeinem der vorhergehenden Ansprüche, dadurch gekennzeichnet, daß die Größe des Luftspaltes (21) durch Ändern der Temperatur des radial äußeren ringförmigen Teiles (12) variiert wird, wenn der radial innere Teil (17) an ihn angegossen wird.

5. Verfahren nach irgendeinem der vorhergehenden Ansprüche, dadurch gekennzeichnet, daß der Luftspalt (21) nicht größer als 0,5 mm ist.

6. Verfahren nach irgendeinem der vorhergehenden Ansprüche, dadurch gekennzeichnet, daß der radial innere Teil (17) mit einem axial verlaufenden Abschnitt (18), der sich von dem inneren Rand des radial äußeren ringförmigen Teiles (12) wegerstreckt, und einem radial verlaufenden Mittelabschnitt (19) ausgebildet ist.

## Revendications

1. Procédé de fabrication d'un disque de frein (11), comportant une partie annulaire externe radiale (12) présentant des surfaces de friction radiales (13, 13') dans des directions opposées et fixées par coulée à sa périphérie interne à une partie interne radiale co-axiale (17) pour attacher le disque (11) à un élément rotatif, et comportant un espace d'air (21) annulaire substantiellement continu entre la périphérie interne de la partie externe radiale (12) et la périphérie externe de la partie interne radiale (17), procédé étant caractérisé en ce que la partie interne radiale (17) qui est formée d'un alliage d'aluminium, est coulée in situ sur la partie annulaire externe radiale (12) qui est formée d'un métal ferreux, la partie annulaire externe radiale (12) étant froide ou tiède lorsque la partie interne radiale (17) est coulée sur celle-ci, de sorte que lorsque la partie interne radiale (17) se refroidit ensuite, l'espace d'air annulaire pratiquement continu (21) est formé par contraction de la partie interne radiale (17) s'éloignant de la partie externe radiale (12), après coulée.

2. Procédé selon la revendication 1, caractérisé en ce que la partie annulaire externe radiale (12) comporte des pattes (14) s'étendant radialement vers l'intérieur et solidaires de sa périphérie interne, dans lequel la partie interne radiale (17) est coulée sur les pattes (14) pour fixer ensemble les parties externes radiales et internes radiales (12 et 17) de telle manière que l'espace d'air (21) est traversé seulement par les pattes (14).

3. Procédé selon la revendication 2, caractérisé en ce que les pattes (14) sont décalées axialement en direction d'une surface de friction (13').

4. Procédé selon l'une quelconque des revendications précédentes, caractérisé en ce que la dimension de l'espace d'air (21) varie en modifiant la température de la partie annulaire externe radiale (12) lorsque la partie interne radiale (17) est coulée sur celle-ci.

5. Procédé selon l'une quelconque des revendications précédentes, caractérisé en ce que l'espace d'air (21) n'est pas supérieur à 0,5 millimètre.

6. Procédé selon l'une quelconque des revendications précédentes, caractérisé en ce que la partie interne radiale (17) est formée d'une partie s'étendant axialement (18) s'écartant de la périphérie interne de la partie annulaire externe radiale (12) et d'une partie centrale s'étendant radialement (19).

Fig.1

Fig.2